(19) Europäisches Patentamt
European Patent Office
Office européen des brevets

(11) EP 1 918 306 A2

(12) EUROPEAN PATENT APPLICATION

(43) Date of publication:
**07.05.2008 Bulletin 2008/19**

(51) Int Cl.:
***C08B 37/16*** *(2006.01)* ***C08B 31/00*** *(2006.01)*
***C08G 81/00*** *(2006.01)*

(21) Application number: **07119798.2**

(22) Date of filing: **31.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **31.10.2006 US 855367 P**

(71) Applicant: **The University of New Brunswick**
**Fredericton,**
**New Brunswick E3B 5A3 (CA)**

(72) Inventors:
- **Xiao, Huining**
  **New Brunswick, E3B 6M1 (CA)**
- **Guan, Yong**
  **East China Univ. of Science & Techn.**
  **Shanghai 200237 (CN)**
- **Zheng, Anna**
  **East China Univ. of Science & Techn.**
  **Shanghai 200237 (CN)**

(74) Representative: **Elend, Almut Susanne et al**
**Venner Shipley LLP**
**20 Little Britain**
**London EC1A 7DH (GB)**

(54) **Antimicrobial and bacteriostatic-modified polysaccharides**

(57) Polysaccharide fibres, such as cellulose or starch, modified by grafting an amino-containing antimicrobial polymer (ACP) onto the fibres or starch using a co-polymerization reaction, exhibits high antimicrobial activity. For example, the presence of 1.0% by weight grafted polymer in the cellulose fibres or starch fibres results in excellent antimicrobial activity (over 99% inhibition). The application further discloses that including triclosan or butylparaben into a novel cationic β-cyclodextrin polymer or nanocapsule yields a bacteriostat.

EP 1 918 306 A2

## Description

### FIELD

The present application relates to antimicrobial and bacteriostatic-modified polymers for cellulose fibres.

### BACKGROUND

Infection control is of utmost importance in a variety of places, which require a high level of hygiene. For example, hospitals, pharmaceutical production units, and food factories need to be rigorously disinfected in order to destroy pathogenic microbes. Accordingly, many raw materials have been subjected to antimicrobial modification.

Cellulose, which is a naturally occurring complex polysaccharide, is the most abundant renewable organic raw material in the world. Its derivatives have many important applications in the fibre, paper, and packaging industries. There is a need to make the material antimicrobial, especially for products requiring a high degree of safety for the general population.

Starch is a combination of two polymeric carbohydrates (linear or branched polysaccharides) for use, *inter alia,* in the manufacture of adhesives, paper, and textiles.

The properties of both cellulose and starch can be modified by changing both their physical and chemical structure. The graft copolymerization method has gained importance in modifying the chemical and physical properties of pure cellulose and has been investigated in the last few decades. Graft copolymerization of varieties of monomers onto cellulose has been carried out using a variety of techniques such as irradiation with ultraviolet light, gamma rays and plasma ion beams, atom transfer radical polymerization, and ceric ion initiation methods. Ceric ion initiation offers the great advantage of forming free-radicals on the cellulose backbone by a single electron transfer process to promote grafting of monomers onto cellulose.

The requirements for a good disinfectant are as follows: it has to be fast acting, highly biocidal to a broad spectrum of microorganisms, easy to handle, and, of particular importance for domestic use, non-toxic to humans. In this regard, polycations have attracted considerable attention as highly efficient biocidal and non-toxic agents. Polycations are a safe alternative to common disinfectants such as formaldehyde, ethylene oxide, chlorine or hypochlorite solutions, iodine, alcohols, phenols, or other compounds, and have been widely used as non-toxic disinfectants or additives.

Amino-containing polymer (ACP) is a cationic polyelectrolyte. The lethal action of cationic polymers to bacterial cells is suggested to be based on an irreversible loss of essential cellular components as a direct consequence of cytoplasmic membrane damage. The lethal sequence consists of a series of cytological and physiological changes, some of which are reversible and culminate in the death of the cell. After rapid attraction toward the bacterial surface, polymers are bound to a receptive site on the bacterial surface and move toward the cytoplasmic membrane. This causes leakage of low molecular weight cytoplasmic components such as potassium ions and activation of membrane bound enzymes, e.g., ATPase, which is followed by an extensive disruption of the cytoplasmic membrane, leakage of macromolecular components (nucleotides), and precipitation of cell contents.

### SUMMARY

According to an aspect of the present invention, there is provided a modified polysaccharide having antimicrobial properties. The modified polysaccharide comprises an amino-containing polymer having antimicrobial activity grafted onto a polysaccharide, wherein the modified polysaccharide exhibits high antimicrobial activity.

In an embodiment of the present invention, the modified polysaccharide is present in a concentration ranging from about 10.00% to about 99.90% by weight in one embodiment and from about 50.00% to about 99.90% by weight of the modified polysaccharide. The amino-containing polymer is present in a concentration ranging from about 0.05% to about 50.00% by weight of the modified polysaccharide.

The present application further discloses a sheet product comprising the antimicrobial-modified polysaccharide.

In a further aspect of the present invention, the amino-containing polymer of the modified polysaccharide has antimicrobial activity against *Escherichia coli* (*E. coli*) and *Staphylococcus aureus* (*S. aureus*) of a minimum inhibitory concentration of less than about 50 parts per million.

In an additional embodiment of the present invention, a method of grafting an amino-containing polymer having antimicrobial activity onto a polysaccharide is disclosed. The method comprises the steps of reacting the amino-containing polymer with a double-bond containing chemical agent or vinyl containing chemical agent forming a reactive amino-containing polymer; adding the reactive amino-containing polymer to a water suspension or solution of a polysaccharide and an initiator, whereby a copolymerization grafting reaction occurs between the polysaccharide and the reactive amino-containing polymer; and removing ungrafted amino-containing polymer.

In an additional aspect of the invention, a method of grafting an amino-containing polymer onto starch is

disclosed, producing a modified starch suitable for use as an additive to paper products. The method comprises the steps of reacting the amino-containing polymer with glycidyl methacrylate to produce a modified amino-containing polymer; adding the modified amino-containing polymer and an initiator to a solution or suspension of starch; adjusting the pH of the suspension or solution of starch; adjusting the temperature of the suspension or solution of starch; and stopping the reaction after sufficient time and isolating the modified starch.

In a further embodiment of the present invention, a method of grafting an amino-containing polymer onto starch utilizing a coupling agent is disclosed. The method comprises adjusting the pH of a water solution or suspension of starch in a flask; dropwise adding a coupling agent to the flask; adjusting the temperature of the reaction components; dropwise adding the amino-containing polymer to the flask; and isolating the modified starch.

In accordance with a further embodiment of the invention, a novel cationic β-cyclodextrin (CPβCD) polymer containing quaternary ammonium groups has been synthesized and used to produce a triclosan/CPβCD or butylparaben/CPβCD complex, which possess bacteriostatic properties.

In accordance with a further embodiment, the present invention relates to a nanocapsule having antimicrobial activity suitable for treating fibres, the nanocapsule comprising a cationic cyclodextrin polymer having internal hydrophobic cavities; and an antimicrobial agent located within the internal hydrophobic cavities.

## BRIEF DESCRIPTION OF THE DRAWINGS

The invention is described below with reference to the accompanying drawings, wherein:

Fig. 1 shows the infrared spectra of cellulose fibres and grafted fibres;

Fig. 2 shows the energy dispersive x-ray spectroscopy of grafted fibres;

Figs. 3 and 4 show the effects of reaction time and temperature on graft percentage of cellulose fibres;

Fig. 5 shows the effect of CAN concentration on graft percentage and efficiency of cellulose fibres;

Fig. 6 shows the effect of pH on the percentage and efficiency of grafting;

Fig. 7 shows the relationship between charge density and graft percentage of modified fibres;

Fig. 8 shows a representative wood fibre model;

Fig. 9 is an AFM image of the fibrillar structure of virgin fibre;

Figs. 10 to 12 are AFM images of ACP-grafted fibre;

Figs. 13 and 14 are graphs of the water solubility of triclosan and butylparaben over cationic β-cyclodextrin (CPβCD) content; and

Fig. 15 is an image of treated and untreated paper samples in ring-diffusion antimicrobial tests.

## DETAILED DESCRIPTION

In accordance with an embodiment of the present invention, a reactive amino-containing polymer (ACP) is grafted onto cellulose fibres or starch using ceric ammonium nitrate $[Ce(NH_4)_2(NO_3)_6]$ as an initiator in the graft copolymerization. A person of ordinary skill in the art would understand that other initiators could be used, such as potassium persulfate or ammonium persulfate.

The following examples describe the methods of the embodiments of the present invention in greater detail. It should be noted that the cellulose fibres used in the examples were bleached sulfite pulps originating from softwood (spruce). The preferred ACP is a guanidine-based polymer represented by the formula:

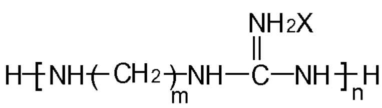

or

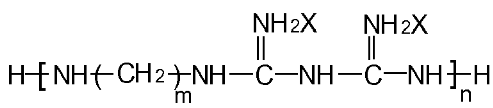

,

wherein m is 2-50; n is 2-200; and X represents $Cl^-$, $Br^-$, $NO_3$-, $HCO_3$-, $H_2PO_4$-, $CH_3COO$-, $CH_3(CH_2)_{10}COO$-, or $CH_3(CH_2)_{16}COO$-.

The preferred guanidine-based polymer is polyhexamethylene guanidine hydrochloride (PHGH), which was prepared by the condensation polymerization of diamine and imino compounds.

**Example 1- In situ Copolymerization of Reactive ACP and Cellulose**

First unsaturated double bonds were introduced into the ACP by reacting it with a double-bond containing chemical agent or a vinyl containing chemical agent, such as acrylic acid, methacrylic acid, methyl methacrylate, ethyl methacrylate, butyl acrylate, ethyl acrylate, 2-hydroxyethyl acrylate, 2-hydroxypropyl acrylate, undecylenic acid, glycidyl methacrylate, glycidyl acrylate, 2-hydroxypropyl methacrylate, maleic anhydride, fumarate, itaconic acid, or sorbic acid. In the present example, glycidyl methacrylate (GMA) was used (Scheme 1). The molar ratio of amino and epoxy groups is about 0.75-1.0. This reaction can be carried out at room temperature for 5 to 360 minutes. In the present example, the reaction was carried at room temperature in aqueous solution for 120 minutes.

Scheme 1

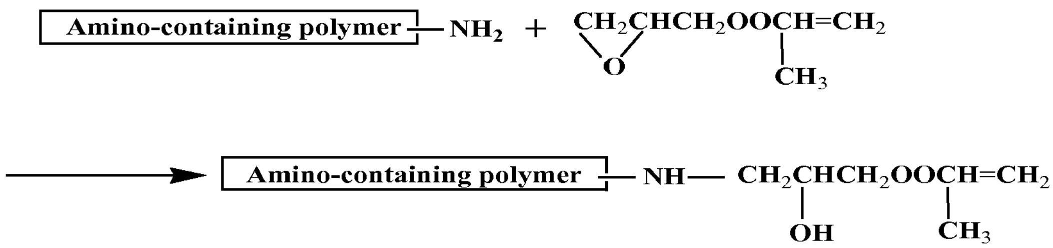


Then sulfite pulp and distilled deionized (DD) water were placed in a 250 ml Erlenmeyer flask, and the mixture was stirred and purged by passing nitrogen therethrough for 20 minutes. GMA modified or reactive ACP polymer and ceric ammonium nitrate (CAN) at a concentration of 99.99% by weight were then added to the flask. 1N $HNO_3$ and 1N NaOH were used to adjust the pH of the pulp suspension to about pH 5. The reaction was carried out by placing the flask in a water bath at temperatures ranging from approximately 20 to 80°C and for 5 to 180 minutes (Scheme 2).

Scheme 2

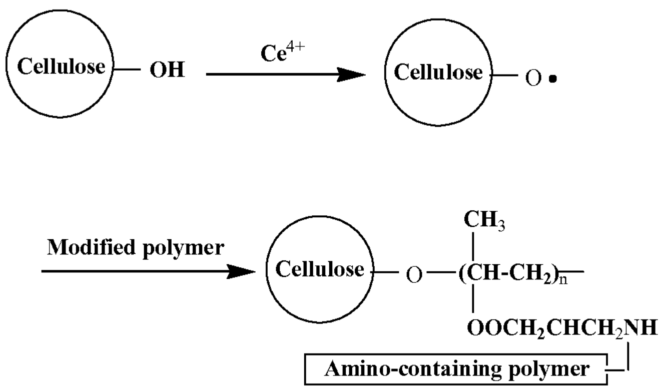


After the desired time had elapsed, the reaction was stopped by adding 0.5% hydroquinone solution. The treated fibres were washed three times with distilled water to remove the ungrafted polymer.

In an alternative embodiment, the CAN initiator can be combined with the sulfite pulp solution or suspension, followed by the GMA modified or reactive ACP polymer being added after 5 to 30 minutes. The reaction can then be carried out at a temperature ranging from 30 to 80°C, with a reaction time of 5 to 180 minutes.

The graft percentage ("GP") and graft efficiency ("GE") were determined as follows:

$$GP = \frac{W_g - W_o}{W_o} \times 100 \quad , \quad GE = \frac{W_g - W_o}{W_p} \times 100$$

where $W_o$, $W_g$, and $W_p$ represent the weights of the original fibres, grafted fibre, and the added polymer, respectively.

All the data of GP and GE were obtained without extraction. In fact, three samples were selected and extracted with DD water in a Soxhlet apparatus for 24 hours. The maximum weight loss was less than 5%.

Attenuated total reflectance-Fourier transform infrared ("ATR-FTIR") spectra were obtained with a NEXUS 470 spectrophotometer [Nicolet Thermo Instruments (Canada) Inc.], using a ZnSe reflection element. Elements of the grafted fibres were analyzed by energy dispersive x-ray spectroscopy on a JEOL 2011 scanning transmission electron microscope.

Charge density of modified fibres was determined via back titration using a Particle Charge Detector MÜtek PCD 03 (Herrsching, Germany). About 0.1 g of pulp (10% fibre consistency) was added to 40 ml 0.5 mM anionic polyvinyl sulfate ("PVS") solution (concentration = 0.5 mM). The resulting suspension was immersed in a water bath shaker (Innova 3100, New Brunswick Scientific) and shaken (150 rpm) at 40°C for 24 hours. Then the suspension was filtered with a 150 mesh polytetrafluoroethylene screen. The filtrate was diluted to 50 ml (pH ranges from 7.5-8.0). 10 ml of the solution were added to a measure cell and titrated with a standard cationic polyelectrolyte [poly(diallyldimethylammonium chloride) ("poly-DADMAC)"] (concentration = 1 mM). Three repeats were conducted to get an average value for each sample.

To determine the morphology of the fibre surfaces, atomic force microscope ("AFM") measurements were performed using a Nanoscope IIIa from Veeco Instruments Inc., Santa Barbara, CA. The images were scanned in Multimode mode in air using a commercial silicon tapping probe (NP-S20, Veeco Instruments) with a resonance frequency of about 273 kHz. For each sample, images of at least ten different fibres were scanned. Usually five different areas of each fibre were investigated. Only representative images are shown in the drawings.

Although AFM has the ability to obtain high resolution morphological images, it has apparently not been used to localize grafts on cellulose fibres (Niemi and Paulapuro, 2002[1]; Maciel and Christopher, 2002[2]; Gustaffsson, Ciovica and Peltonen, 2003[3]). An attempt was made to identify the grafts by measuring the interaction forces or deflection distance curves between the probe and samples. The measurements were performed in picoforce mode using a contact probe, having a spring constant of 0.32 N/m. To eliminate the effect of the geometry relevant for the interaction zone, "colloid probe technique" (Drucker et al, 1991[4]; and Drucker et al, 1992[5]) was employed. A spherical borosilicate particle ($\Phi$=5$\mu$) probe, supplied by Novascan Technologies Inc. (2501 North Loop Drive, Ams, Los Angeles, 50010, U.S.A.), was used to detect the interaction between the probe and samples. The experiments were carried out at room temperature in air and the scan size was 500 nm. In each experiment, the force-distance curves were measured on the surface at five different spots and on each spot 20 times at a constant tip velocity of 0.5$\mu$m/ s. The force-distance curves were calculated from the cantilever deflection and the displacement of the piezo.

Antimicrobial tests were carried out at the Research and Productivity Council (RPC) (Fredericton, New Brunswick, Canada) and the Institute of Food Science at the University of Guelph. A shake-flask method was used to quantify the antibacterial activity of cellulose fibres and the modified fibres against *Escherichia coli* (ATCC #25922). 5 ml of the diluted cell solution was added to a triangle flask (200 ml) and mixed with 70 ml of phosphate-buffered saline (PBS, pH 7.2-7.4) and 1.0 g of modified or unmodified fibres. The final cell concentration was $1.5 \times 10^6$ cells/ml. After the resulting culture was shaken (150 rpm) at 37°C for 1 hour, 0.1 ml of the cell solution was taken from three different parts in the flask, seeded on three agar plates and incubated at 37°C for 48 hours. The number of colonies was counted by measuring the colonies formed and compensating with the degree of cell dilution. The inhibition of the cell growth was calculated using the following equation:

$$\text{Growth inhibition of cell (\%)} = (A-B)\,/\,A \times 100$$

where A and B are the number of the colonies detected from the control sample and fibres samples, respectively. Three repeats were conducted to get an average value for each sample.

The copolymerization was confirmed by the ATR-FTIR spectra and energy dispersive X-ray spectroscopy. Fig. 1 shows the IR spectra of cellulose fibres and grafted fibres. The introduction of ACP was confirmed from the adsorption peak at 1633 $cm^{-1}$ due to imino groups and at 1727 $cm^{-1}$ due to carboxyl groups. Fig. 2 shows the energy dispersive X-ray spectroscopy of grafted fibres. The peaks of elements N, Cl, and Ce are due to the grafted materials. The height of peaks is not proportional to the actual constituent. The reason is that this approach is not good for quantitative analysis. Another reason is that because the site of nitrogen is quite near to those of carbon and oxygen, the peak of nitrogen is overlapped to some extent.

The mechanism of grafting vinyl monomers onto cellulose fibres using ceric ions as an initiator has been reported in the literature. In the present case, in one embodiment, a difference is that reactive ACP that had relatively higher molecular weight was used instead of ordinary monomers.

The effects of reaction time and temperature are shown in Figs. 3 and 4. Time and temperature are vital factors in determining the extent of grafting. The effect of time and temperature on the extent of grafting was investigated at 5 different temperatures: 30, 40, 50, 60 and 70°C, and reaction time ranged from 10 to 180 minutes. The curves of graft percentage and efficiency have similar trends. Increases in temperature may lead to several effects, such as: larger swelling of fibres; an increase in the diffusion of polymer; the initiating redox system may be easily decomposed; and the rate of initiation and propagation may be enhanced, but the rate of termination and homopolymerization may increase. From the results, grafting yield can be increased by increasing temperature. The graft percentage and efficiency initially increase with an increase in reaction time, and then decrease. This outcome may be attributable to degrafting after a certain time. The maximum 14.3% of graft percentage (corresponding to an ACP concentration of 12.5% by weight of the modified polysaccharide) and 35.6% of graft efficiency were observed at 70°C and 30 minute reaction time.

The effect of initiator concentration on graft percentage and efficiency is presented in Fig. 5. In the case of grafting initiated by a chemical initiator, the extent of grafting increases with the increase of initiator concentration up to a certain limit, beyond which grafting will decrease. At low concentration, the increase of graft percentage may be due to catalyst exhaustion or an increase in graft rate. At high concentration, the decrease of graft percentage could be due to decrease in the rate of polymerization. Increasing ceric ions will lead to an increase in cellulose radical termination of growing grafted chains and homopolymerization. As shown in Fig. 5, the highest percentage and efficiency were obtained using the CAN concentration at around 5 mmol. The percentage and efficiency of grafting reached 19.3 % (corresponding to an ACP concentration of 16.2% by weight of the modified polysaccharide) and 48.2 %, respectively.

The process of graft copolymerization is strongly dependent on the pH of the medium. The effect of pH on the percentage and efficiency of grafting is shown in Fig. 6. The use of acids in the grafting reaction assists in the enhancement of graft level both by causing inter- and intracrystalline swelling of cellulose fibres, thus improving the monomer's accessibility. Acid also acted as a catalyst and enhanced the oxidizing capacity of the initiator. At a higher concentration, however, acid will decrease the grafting rate by acting as a free radical terminator. In most of the literature of grafting copolymerization on cellulose fibres using CAN as the initiator, the optimum of pH is around 2. In this case, the optimum is about 5. Cellulose is often a negative-charged material. The higher the pH, the greater will be the negative charge of the cellulose fibres. Acrylate and acrylic acid are the most common monomers studied for grafting on the cellulose backbones. They bear the negative-charged ions or groups. The low pH helps to decrease the negative-charge density and improve the monomer's accessibility. In this case, however, a cationic polymer was used for grafting, so it is easier for it to approach the fibres at higher pH via electrostatic association. That is why the optimum pH in this case is higher than that of other instances of grafting.

The concentration of the reactants in the graft copolymerization reaction can range from about 0.02 to 10.0% by weight of the total reactants for ACP, 0.5 to 20.0% by weight of the total reaction for the polysaccharide, 0.5 to 10.0% by weight of the total reactants for the initiator, and 0.001 to 3.0% by weight of the total reactants for the double-bond containing agent or vinyl containing agent.

The optimum conditions of graft copolymerization obtained are as follows:

> a temperature of 70°C; a pH of 5; a reaction time of 0.5 to 1 hour; and an initiator concentration of 5 mmol. The graft percentage and efficiency could reach over 20% (corresponding to an ACP concentration of 16.7% by weight of the modified polysaccharide) and 50%, respectively.

Fig. 7 shows the relationship between charge density and graft percentage of the modified fibres. The charge density of virgin cellulose is $-45.89\times10^{-6}$eq/g. By grafting cellulose fibres with cationic polymers, their charge density changes from negative to positive, and increases linearly with the increase of graft percentage. These results provide direct evidence that the surface property of the fibres has been changed by in situ copolymerization, and also prove that the method described herein to determine the graft percentage is reliable.

A representative wood fibre model (Fig. 8) (Smook, 1994)[6] is a complex cylinder consisting of the compound middle lamella (ML + P) and the outmost and middle layers of secondary wall (S1 and S2, respectively). In that model, each layer is composed of two parts, namely, the cellulose microfibril (CMF) bundle as the framework and the isotropic lignin-hemicellulose skeleton as the matrix (MT). The main composition of ML and P layer is lignin and hemicellulose, which is almost completely removed in the chemical pulp. The main composition of secondary wall is cellulose. The CMF is composed of crystalline cellulose. It is supposed that the CMFs in the S2 are linear oriented in certain directions,

while in the S1 layer the CMFs are oriented to a network. The orientation of the CMFs is randomly distributed in the ML and P layer, and looser compared to those in the S1 and S2 layer.

Swelling occurs mainly at the interphase of CMFs. Due to different processing, there is more hemicellulose remaining in sulfite pulp than that in kraft pulp. Accordingly, sulfite pulp more easily swells and is more suitable for graft copolymerization than kraft pulp, which is why the inventors chose sulfite pulp.

AFM was used to image samples in tapping mode. AFM revealed a pronounced difference between the virgin and grafted cellulose fibres. The fibrillar structure of the virgin fibre surface can clearly be seen (see Fig. 9). The random orientation of the CMFs indicates they belong to the primary (P) layer. The diameter of the CMFs ranges from 12 to 56 nanometers. After graft copolymerization, the surface of fibres appears to be covered with granules. The size of these granules varies between 60 to 200 nm. A linear oriented part can be seen beside the granules in Figs. 10 to 11. This type structure could not be found in the virgin sulfite fibres even though nearly one hundred sample points were tested by AFM. To confirm the relationship between this structure and the graft reaction, another experiment was conducted. Fibres were treated under the same conditions as the grafted samples, but there was no ACP in the reaction system, only the cellulose fibres and initiator. The linear oriented part is also obvious, as shown in Fig. 12. Part of the P or S1 layer was supposed to be destroyed during graft copolymerization and the inner layer exposed, just as in the separation effect of the high shear force in the mechanical pulp processing.

There are few granules on the linear oriented area. AFM was used to localize the grafts in the cellulose fibres by measuring the adhesion and attraction force between a colloidal probe and the samples. The results are listed in Table 1.

**Table 1**
**The adhesion force between the colloid probe and cellulose fibres**

| Sample | Adhesion Force ( nN ) | | | | | Average (nN) | Standard Deviation (nN) |
|---|---|---|---|---|---|---|---|
| | Spot 1 | Spot 2 | Spot 3 | Spot 4 | Spot 5 | | |
| Virgin fibre | 77.06 | 74.1 | 74.1 | 91.1 | 92.9 | 81.9 | 9.4 |
| Orient area of grafted fibre | 70.10 | 77.3 | 83.2 | 74.0 | 96.5 | 80.2 | 10.3 |
| Granular area of grafted fibre | 173.1 | 172.3 | 299.9 | 480.8 | 476.9 | 320.6 | 153.5 |

Theoretically, the attraction and adhesion forces between the materials with opposite electrostatic charges are much stronger than those between the materials with the same kind of electrostatic charges. Both the glass probe and the cellulose fibres are negatively charged materials, while grafted polymer is positively charged. From Table 1, it can be seen that the forces of virgin fibre and the oriented area of grafted fibre are almost the same, and are much weaker than those of the granular area of grafted fibre. The attraction and adhesion forces of the latter were increased by about 15 and 4 times, respectively. The largest difference occurs in the attraction forces, which are usually due to the electrostatic attraction and surface tension forces. This indicates that the grains are the grafted polymer, and the linear oriented area is composed of crystal cellulose microfibrils. Furthermore, the standard deviations of the granular area are also relatively large. The low deviations indicate that the surface structure and component of the virgin fibre and the oriented area are very uniform, while things are quite different in the granular area.

From the results of AFM, both images and force analysis, changes were revealed after graft copolymerization, and the location of grafted component was also identified. The grafted polymer appears to form grains whose diameters range from 60 to 200 nm. The graft copolymerization was more likely to take place in an amorphous area rather than in a crystal area, which is why there are few granules on the linear oriented area. AFM gives direct evidences of this view.

The antimicrobial activity of the modified cellulose fibres of different ACP concentration against *E. coli* is shown in Table 2.

**Table 2**
**Antimicrobial activity of modified fibres against *E. coli***

| Sample | Concentration of polymer (wt%) (based on fibres) | Growth inhibition of cells compared to sample 1 after 48 hours incubation (%) |
|---|---|---|
| Control* | 0 | |
| 1 | 0 | -95.97 |
| 2 | 0.5 | 88.85 |

(continued)

**Antimicrobial activity of modified fibres against *E. coli***

| Sample | Concentration of polymer (wt%) (based on fibres) | Growth inhibition of cells compared to sample 1 after 48 hours incubation (%) |
|---|---|---|
| 3 | 1.0 | 99.86 |
| 4 | 2.0 | 99.99 |
| 5 | 4.0 | 100 |

There were no cellulose fibres in the control sample. The control sample is normally used to determine how fast the bacteria are diluted since they are growing at optimal conditions.

In Table 2, the growth inhibition of sample 1 is -95.97%, which means the colonies number of sample 1 is almost two times larger than that of the control sample. It indicates the cellulose fibres might act as nutrient for the bacteria. In the presence of 1.0% (wt) grafted polymer in fibres, an excellent antimicrobial activity (over 99% inhibition) has been achieved. In the current test, the modified fibres were mixed with the cultivation for only 1 hour, which indicates that effective inhibition was reached rapidly.

In the same manner as described above for cellulose, an antimicrobial starch is prepared by grafting guanidine polymer onto the backbone of starch. As described in Examples 2 and 3, two approaches can be used to synthesize the modified starch.

**Example 2 - In situ Polymerization of Reactive ACP and Starch**

Starch, a natural polysaccharide, is extensively used in the paper industry. It is presently the third most prevalent component by weight in papermaking, only surpassed by cellulose fibre and mineral pigments. Starch is mainly used to increase the sheet dry strength and to retain fragments of fibres (fines). Starch is also applied to the dry sheet to increase the water penetration resistance of the paper (sizing). In recent years, the performance requirements for starch products have steadily increased due to rapid advancements in papermaking technology, strong competition by synthetic polymers, and legislative pressures to meet environmental compliance goals.

These challenges and other new conditions in papermaking will require the production of new starch products that are tailor-made for specific applications. In previous work, we have successfully modified starch by grafting antimicrobial polymers. The modified starch, containing cationic amino groups, is a safe alternative to common disinfectants such as formaldehyde, ethylene oxide, chlorine or hypochlorite solutions, iodine, alcohols, phenols, or other compounds, and can easily be applied in the paper industry.

This present application provides a method of preparing cationic starch which can be applied as an antimicrobial additive to paper products. The key advantage is that the antimicrobial starches can be added in several locations in conventional or existing paper machines, such as thick stocks, head box, wet-end, and size press, which substantially facilitates the production of antimicrobial paper products.

The in situ graft copolymerization of reactive ACP and starches is described in detail below. CAN is used as a free-radical initiator to induce in situ graft copolymerization of reactive ACP and starches. The resulting antimicrobial-modified starches can be used as functional additives for papermaking. Preferably the reactive ACP is reactive PHGH, i.e. GMA modified PHGH prepared by reacting PHGH with GMA:

Scheme 3

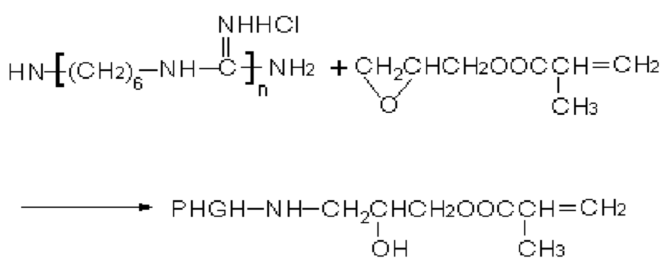

Scheme 4

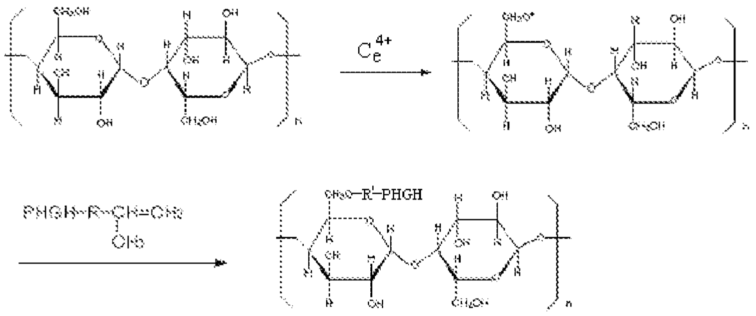

A typical procedure is as follows:

- a suspension of potato starch is cooked at a temperature of 95 to 98°C until a clear solution is obtained,
- a certain amount of starch solution and water are placed in a 250 ml Erlenmeyer flask, and the mixture is stirred and purged by passing nitrogen therethrough for 20 minutes,
- GMA modified PHGH and CAN are added to the flask followed by 1N $HNO_3$ and 1N NaOH to adjust the pH of the pulp suspension, and
- the suspension is heated by placing the flask in a water bath.

The optimal reaction conditions are as follows: time - 60 minutes; temperature - 30 to 40°C; starch concentration - 5% by wt; PHGH/ starch- 120 % by wt; CAN/starch - 4% by wt, and pH = 6.

The graft efficiency (the percentage of grafted PHGH based on the initial amount of PHGH) can be adjusted by varying the reaction duration and temperature, starch concentration, the ratios of PHGH: starch and CAN:starch, CAN concentration and pH.

Two approaches were used to apply cationic starches to paper samples. One was based on adsorption. After a certain amount of cationic starches were adsorbed on the wood fibres, virgin pulps were blended with such starch-absorbed pulps at different ratios. Then handmade paper sheets with a pulp grammage of 60 $g/m^2$ were prepared according to TAPPI Test Methods T205. The other method was to spray starch solution directly onto the surface of hand sheets without any pretreatment on wood fibres.

*Salmonella enteritidis* (strain CB 919 Lux AB) was used for antimicrobial tests. Two testing methods, namely the shaking method and the disk diffusion method, were used to quantify the antimicrobial activity.

The shaking method (quantitative test) is the same as the one addressed previously. The disk diffusion method (semi-quantitative test) is described in detail below. 0.1 ml of culture ($10^8$ CFU/ml) is deposited on agar plates. A roundish sheet of sample (Φ 10-15 mm) is placed on the surface of agar. The plates are placed in an incubator at 37°C for 16-24 hours, following which the inhibition ring is measured. The dimension of the ring is proportional to antimicrobial efficiency or potency of the antibiotic.

The results for antimicrobial cellulose fibres prepared by treating the fibres with various dosages of antimicrobial starches are presented in Table 3:

**Table 3**

| **Antimicrobial Results for Antimicrobial-Starch Modified Fibres** | | | |
|---|---|---|---|
| Sample | PHGH (%) | Diameter of inhibition ring (mm) (diffusion) | Growth inhibition (%) (shaking) |
| Blank | 0 | 0 | 0 |
| Cationic starch | 0.5 | 0.8 | 100 |
| Cationic starch | 1.0 | 1.0 | 100 |
| Cationic starch* | 1.0 | 2.5 | 100 |

Notes: 1. Diffusion method, the diameter of the ring is the difference between the diameters of the whole ring and the roundish sheet. Two repeats were calculated to get an average. 2. All the samples are prepared by spraying antimicrobial agents on the paper surface except the sample with "*".

**Example 3 - Using either diglycidyl ether or epichlorohydrin as coupling agent**

The reaction to couple PHGH with starch is shown in Scheme 5.

Scheme 5

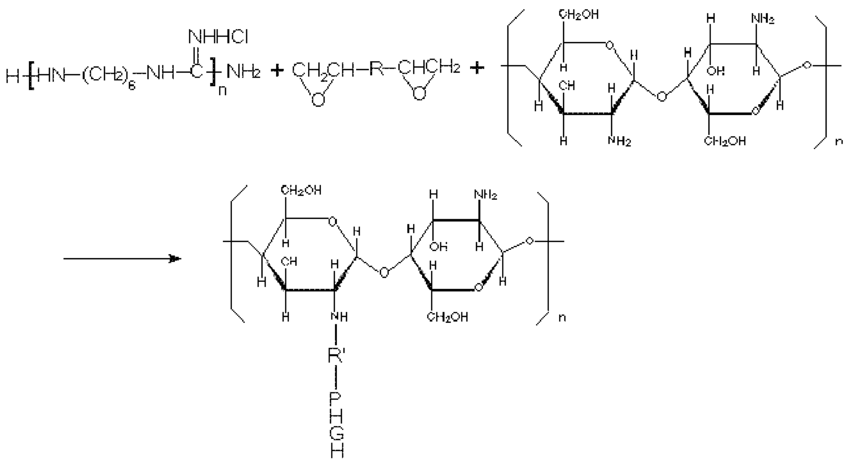

A typical procedure is as follows:

- adjusting the pH of a water solution or suspension of starch (the polysaccharide is present in a concentration of 0.5 to 20.0% by weight of the total reactants) in a flask to a pH ranging from approximately 4 to 12;
- dropwise adding a coupling agent, such as glycerol diglycidyl ether or epichlorohydrin, to the flask over a period of about 2 to about 80 minutes (the coupling agent is present in a concentration of 0.005 % to 5.0% by weight of total reactants);
- adjusting the temperature of the reaction components to a temperature ranging from approximately 30 to 90°C;
- dropwise adding the ACP, such as PHGH, to the flask to obtain a concentration of PHGH of 0.05 to 15.0% by weight of the total reactants; and
- isolating the modified starch.

An example of this procedure is as follows:

- 2 g of NaOH is added to a cooked starch solution in a flask. 5 g of glycerol diglycidyl ether or 3 g of epichlorohydrin is added dropwise to the flask within 40 minutes.
- The flask is placed in a 70°C water bath. 85 g of 20% by wt guanidine polymer solution is added dropwise to the flask within 1 hour. Then the reaction is contained for another 3 hours. The oil-like liquid (epichlorohydrin ether) disappears by the end the reaction.

The graft efficiency can be altered by controlling the parameters mentioned above. The maximum graft efficiency (the percentage of grafted PHGH based on the entire amount of PHGH) can reach over 87%, and the PHGH content in the modified starch could be about 51% wt.

**Nanocapsules Loaded with Antibiotics as Antimicrobial Agents for Cellulose Products**

Triclosan and butylparaben have excellent bacteriostasis for common bacteria and fungi and have been used extensively in cosmetics, medicine, food, and other industrial products. Triclosan has been approved by the American Food and Drug Administration (FDA) as a gradient for its food packaging materials. However, both compounds are hydrophobic with extremely low water solubility (about 10-20 mg/L). This limits their applications in rendering cellulose fibre antimicrobial for specialty paper products.

Cyclodextrins (CDs) are cyclic oligosaccharides consisting of six to eight glucose units linked by α-1,4-glucosidic bonds. The internal hydrophobic cavities (function as nanocapsules) in the CDs facilitate the inclusion of a number of guest molecules. In order to improve its water solubility, a range of novel cationic β-cyclodextrin (CPβCD) polymers bearing quaternary ammonium groups as nanocapsules have been synthesized.

CPβCD nanocapsules with various degrees of polymerization as well as cationic charge densities can be synthesized by a one-step condensation polymerization. Choline chloride (CC) and epichlorohydrin (EP) are used to modify β-CD with quaternary ammonium groups. A typical synthesis procedure for a molar ratio β-CD/EP/CC =1/15/1 is as follows:

- 1 g of NaOH is dissolved in 20 ml of water, and then 5.7 g of β-CD are dissolved in the sodium hydroxide solution. The solution is magnetically stirred at 25°C for 24 hours in a water bath.

- 0.7 g of CC is then fed into the solution rapidly, followed by 6.9 g of EP at a flow rate of about 0.1 ml/min. After the completion of EP feeding, the mixture is heated to 60°C and kept at 60°C over the entire course of the polymerization while magnetically stirring. After 2 hours, the polymerization is terminated by adding an aqueous hydrochloric acid solution.

The triclosan/ CPβCD or butylparaben/ CPβCD complex can be prepared by adopting the procedures described by Arias et al. (1997)[7] and Mura et al. (2002)[8]. Equimolecular amounts of triclosan or butylparaben and CPβCDs are mixed together, then manually ground using a mortar and pestle for 10 minutes, in conditions leading to the best yield and to the most stable complexes. The solubility of triclosan or butylparaben can be determined by a UV spectrophotometer at wavelength of 282 nm and 256 nm, respectively.

The water solubility of triclosan and butylparaben is linear increased with the CPβCD content, as shown in Figs. 13 and 14.

The resulting cationic-modified CD loaded with either triclosan or butylparaben can be used as antimicrobial agents and directly applied to paper samples via various approaches. The preliminary antimicrobial tests, based on both disk-diffusion and shaking methods, showed that the fibres treated with the antimicrobial CD are very effective in inhibiting the growth of E. *coli* and *Salmonella enteritidis* (strain CB 919 Lux AB).

Table 4 presents the results of antimicrobial inhibition using a disk diffusion method for the paper sample treated with cationic-modified cyclodextrin loaded with triclosan against *Salmonella enteritidis.* The average ring size was measured approximately from the clear areas.

**Table 4**

| Antimicrobial performance of the cationic cyclodextrin loaded with triclosan | | | |
|---|---|---|---|
| Sample | Triclosan (%) | Diameter of inhibition ring (mm) (diffusion) | Growth inhibition (%) (shaking) |
| Blank | 0 | 0 | 0 |
| Cationic CD | 0.5 | 6.8 | 100 |
| Cationic CD | 1.0 | 24.8 | 100 |
| Cationic CD* | 0.55 | 12.3 | 100 |

Clearly, the triclosan included in the cationic cyclodextrin inhibits the growth of bacteria very effectively. The efficiency also increases as the dosage increases, as demonstrated by the larger diameter of inhibition ring.

To further investigate the application of these antibiotics/CPβCDs complexes on paper products based on cellulose fibres, the shaking flask method was employed to assess their anti-microbial activities. The effects of antibiotics (both triclosan and butylparaben) concentration and contacting time are respectively listed in Table 5. The growth inhibition increased with the increasing of antibiotics concentration or contacting time. Apparently, triclosan has higher

antimicrobial activity than butylparaben. Therefore, the inhibition growth of triclosan is higher than that of butylparaben when their concentration is lower than 0.5%. With further increase of antibiotics concentration, the growth inhibition reaches about 100% which indicates almost all the bacteria were killed.

It should be noted that the shaking method is more suitable to be employed for antimicrobial activity for the antimicrobial-modified fibre samples. Overall, all antimicrobial-modified cellulose fibres, starches, and cationic cyclodextrin-polymers loaded with triclosan etc. are effective in inhibiting the growth of bacteria but their applications could be case specific.

**Table 5**

**Antimicrobial activity against *E. coli* ATCC 11229 (shaking flask method)**

| Contacting time (min)** | Growth inhibition (%)* | | Concentration (% wt)*** | Growth inhibition (%)* | |
|---|---|---|---|---|---|
| | Butylparaben | Triclosan | | Butylparaben | Triclosan |
| 0.5 | 50.0 | 24.6 | 0.03 | 4.54 | 23.2 |
| 1 | 61.9 | 37.7 | 0.06 | 9.09 | 50.2 |
| 3 | 95.8 | 61.0 | 0.125 | 54.6 | 68.1 |
| 10 | 100 **** | 95.8 | 0.25 | 81.8 | 87.1 |
| 30 | 100 | 99.6 | 0.5 | 99.9 | 99.7 |
| 60 | 100 | 100 | 1 | 100 | 100 |

Notes: * The number of colonies of blank control was $2.2 \times 10^6$ CFU/ml.
** The concentration of antibiotics was fixed at 0.5% wt (based on the weight of cellulose fibres).
*** Contacting time was fixed at 1 hour.
**** 100% of growth inhibition indicates all the bacteria were killed and there were no colonies in the agar dishes after incubation. Therefore the standard deviations of such samples are not listed in the Table.

**References:**

1. Heidi Niemi, & Hannu Paulapuro. (2002). Review: Application of scanning probe microscopy to wood, fibre and paper research, Paperi ia Puu-Paper and Timber, Vol. 84, 389-105.

2. Ana Maria Maciel, & Christopher P. Wilkins. (2002). AFM ultrastructural studies of chemical softwood tracheids and secondary fines generated by various refining treatments, Paper Technology, V. 43, July, 25-33.

3. Johanna Gustafsson, Laura Ciovica, & Jouko Peltonen. (2003). The ultastructure of spruce kraft pulps studied by atomic force microscopy (AFM) and X-ray photoelectron spectroscopy (XPS), Polymer, 44, 661-670.

4. W.A. Ducker, T.J. Senden, & R.M. Pashel. (1991). Direct measurement of colloidal forces using an atomic force microscope, Nature, 353, 239.

5. W.A. Ducker, T.J. Senden, & R.M. Pashley. (1992). Measurement of forces in liquids using a force microscope, Langmuir, 8,1831.

6. G.A. Smook. (1994). "Handbook for Pulp & Paper Technologists", 2nd Ed. Angus Wilde Pub., p.11.

7. Arias, M.J., Moyano, J.R., Gines, J.M. (1997). Investigation of the triamterene-cyclodextrin system prepared by co-grinding, Int. J. Pharm., 153,181-189.

8. Giampiero Bettinetti, Paola Mura, Maria Teresa Faucci, Milena Sorrenti, Massimo Setti. (2002). Interaction of naproxen with noncrystalline acetyl band acetyl-g-cyclodextrins in the solid and liquid state, European J of Pharmaceutical Sci., 15, 21-29.

## Claims

1. A modified polysaccharide having antimicrobial properties, the modified polysaccharide comprising:

   a polysaccharide; and
   an amino-containing polymer having antimicrobial activity grafted onto the polysaccharide through a copolymerization reaction;

   wherein the modified polysaccharide exhibits antimicrobial activity.

2. The modified polysaccharide according to claim 1, wherein
   the polysaccharide is present in a concentration ranging from about 10.0 to 99.9%, or from about 50.0 to 99.9% by weight of the modified polysaccharide; and
   the amino-containing polymer is present in a concentration ranging from about 0.05 to about 50.0% by weight of the modified polysaccharide.

3. The modified polysaccharide according to claim 1 or 2, wherein the amino-containing polymer has antimicrobial activity against *E. coli* and *S. aureus* of a minimum inhibitory concentration of not more than about 50 parts per million.

4. The modified polysaccharide according to any one of claims 1 to 3, wherein the polysaccharide comprises cellulose or starch.

5. The modified polysaccharide according to any one of claims 1 to 4, wherein the amino-containing polymer is:

   (a) a guanidine-based polymer; and/or
   (b) a guanidine-based polymer represented by the formula:

   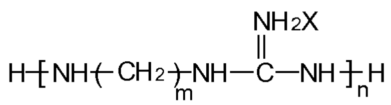
   or
   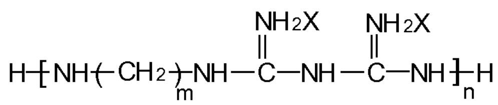
   ,

   where m is 2-50; n is 2-200; and X represents $Cl^-$, $Br^-$, $NO_3$-, $HCO_3$-, $H_2PO_4$-, $CH_3COO$-, $CH_3(CH_2)_{10}COO$-, or $CH_3(CH_2)_{16}COO$-; and/or
   (c) polyhexamethylene guanidine hydrochloride.

6. A sheet product comprising the modified polysaccharide according to any one of claims 1 to 5.

7. The sheet product according to claim 6, wherein the sheet product is a paper product.

8. The sheet product according to claim 6 or 7, wherein the polysaccharide in the modified polysaccharide is cellulose or starch.

9. A method of grafting an amino-containing polymer having antimicrobial activity onto a polysaccharide, the method comprising the steps of:

   (a) reacting the amino-containing polymer with a double-bond containing chemical agent or a vinyl containing chemical agent forming a reactive amino-containing polymer;
   (b) adding the reactive amino-containing polymer to a water suspension or solution of a polysaccharide and an initiator, whereby a copolymerization grafting reaction occurs between the polysaccharide and the reactive amino-containing polymer; and
   (c) removing ungrafted amino-containing polymer;

   wherein the method produces a modified polysaccharide grafted with an amino-containing polymer; and
   wherein the modified polysaccharide exhibits antimicrobial activity.

10. The method of grafting an amino-containing polymer according to claim 9, wherein step (a) comprises reacting the

amino-containing polymer with the double-bond containing chemical agent or the vinyl containing chemical agent at room temperature for 5 to 360 minutes.

**11.** The method of grafting an amino-containing polymer according to claim 9 or 10, wherein step (b) further comprises adjusting the pH of the suspension or solution of polysaccharide:

(a) to about pH 5; and/or
(b) with 1N $HNO_3$ and/or 1N NaOH.

**12.** The method of grafting an amino-containing polymer according to any one of claims 9 to 11, wherein step (b) further comprises the steps of:

combining the initiator with the water suspension or solution of polysaccharide;
after 5 to 30 minutes, adding the reactive amino-containing polymer; and
adjusting the temperature to a temperature in the range of 30 to 80 degrees Celsius and allowing the reaction to occur for 5 to 180 minutes.

**13.** The method of grafting an amino-containing polymer according to any one of claims 9 to 12, wherein:

(a) the amino-containing polymer comprises between about 0.02 to 10.0% by weight of total reactants; and/or
(b) the polysaccharide comprises between about 0.5 to 20.0% by weight of total reactants; and/or
(c) the initiator comprises between about 0.5 to 20.0% by weight of total reactants; and/or
(d) the double-bond containing chemical agent or the vinyl containing chemical agent comprises between about 0.001 to 3.0% by weight of total reactants.

**14.** The method of grafting an amino-containing polymer onto a polysaccharide according to any one of claims 9 to 13, wherein the polysaccharide comprises cellulose or starch.

**15.** The method of grafting an amino-containing polymer onto a polysaccharide according to any one of claims 9 to 14, wherein the double-bond containing chemical agent or vinyl containing chemical agent is acrylic acid, methacrylic acid, methyl methacrylate, ethyl methacrylate, butyl acrylate, ethyl acrylate, 2-hydroxyethyl acrylate, 2-hydroxypropyl acrylate, undecylenic acid, glycidyl methacrylate, glycidyl acrylate, 2-hydroxypropyl methacrylate, maleic anhydride, fumarate, itaconic acid, or sorbic acid.

**16.** The method of grafting an amino-containing polymer onto a polysaccharide according to any one of claims 9 to 15, wherein the initiator is:

(a) a ceric ion; or
(b) potassium persulfate, ammonium persulfate, or ceric ammonium nitrate.

**17.** The method of grafting an amino-containing polymer onto a polysaccharide according to any one of claims 9 to 16, wherein the amino-containing polymer is:

(a) a guanidine-based polymer; and/or
(b) polyhexamethylene guanidine hydrochloride.

**18.** A method of grafting an amino-containing polymer onto starch, producing a modified starch suitable for use as an additive to paper products, the method comprising the steps of:

(a) reacting the amino-containing polymer with glycidyl methacrylate to produce a modified amino-containing polymer;
(b) adding the modified amino-containing polymer and an initiator to a solution or suspension of starch;
(c) adjusting the pH of the suspension or solution of starch;
(d) adjusting the temperature of the suspension or solution of starch; and
(e) stopping the reaction and isolating the modified starch.

**19.** The method of grafting an amino-containing polymer onto starch according to claim 18, wherein in step (e) the reaction is stopped after about 60 minutes.

**20.** The method of grafting an amino-containing polymer onto starch according to claim 18 or 19, wherein step (d) comprises adjusting the temperature to a temperature in the range of about 30 to 40 degrees Celsius.

**21.** The method of grafting an amino-containing polymer onto starch according to any one of claims 18 to 20, wherein step (c) comprises adjusting the pH of the suspension or solution to a pH of about 6.

**22.** A method of grafting an amino-containing polymer onto starch, producing a modified starch suitable for use as an additive to paper products, the method comprising the steps of:

(a) adjusting the pH of a water solution or suspension of starch;
(b) dropwise adding a coupling agent to the solution or suspension of starch;
(c) adjusting the temperature of the reaction components;
(d) dropwise adding the amino-containing polymer to the solution or suspension of starch; and
(e) isolating the modified starch.

**23.** The method of grafting an amino-containing polymer onto starch according to claim 22, wherein step (c) comprises adjusting the temperature to a temperature between about 30 to about 90 degrees Celsius.

**24.** The method of grafting an amino-containing polymer onto starch according to claim 22 or 23, wherein step (c) further comprises adjusting the pH to a pH of about 8 to about 12.

**25.** The method of grafting an amino-containing polymer onto starch according to any one of claims 22 to 24, wherein step (b) comprises dropwise adding the coupling agent over a period of about 2 to about 80 minutes.

**26.** The method of grafting an amino-containing polymer onto starch according to any one of claims 22 to 25, wherein:

(a) the polysaccharide is present in a concentration of about 0.5 to 20.0% by weight of total reactants; and/ or
(b) the coupling agent is present in a concentration of about 0.005% to 5.0% by weight of total reactants; and/ or
(c) the amino-containing polymer is present in a concentration of about 0.05% to 15.0% by weight of total reactants.

**27.** The method of grafting an amino-containing polymer onto starch according to any one of claim 22 to 26, wherein the amino-containing polymer is:

(a) a guanidine-based polymer; and/or
(b) polyhexamethylene guanidine hydrochloride.

**28.** The method of grafting an amino-containing polymer onto starch according to any one of claims 22 to 27, wherein the coupling agent is glycerol diglycidyl ether or epichlorohydrin.

**29.** A nanocapsule having antimicrobial activity suitable for treating fibres, the nanocapsule comprising:

a cationic cyclodextrin polymer having internal hydrophobic cavities; and
an antimicrobial agent located within the internal hydrophobic cavities.

**30.** The nanocapsule according to claim 29, wherein the antimicrobial agent comprises triclosan or butylparaben.

**31.** The nanocapsule according to claim 29 or 30, wherein the cationic cyclodextrin polymer comprises a cationic alpha-cyclodextrin polymer, a cationic beta-cyclodextrin polymer, or a cationic gamma-cyclodextrin polymer.

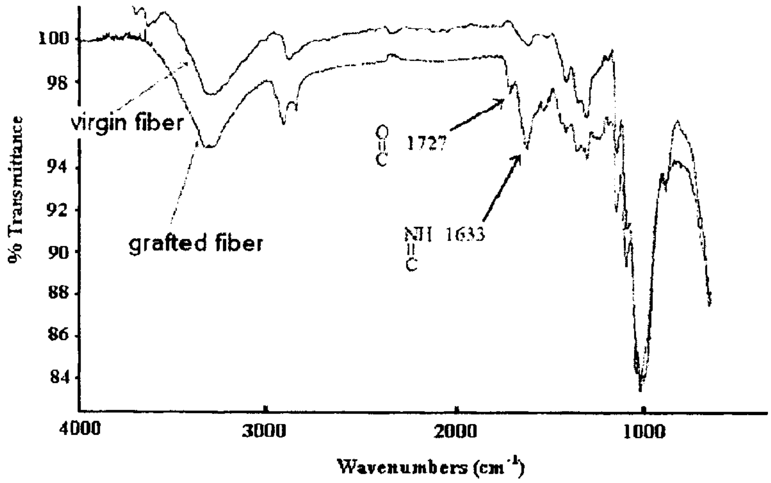
% Transmittance
Wavenumbers (cm⁻¹)
virgin fiber
grafted fiber
1727
NH 1633
100
98
94
92
90
88
86
84
4000
3000
2000
1000

FIG. 1

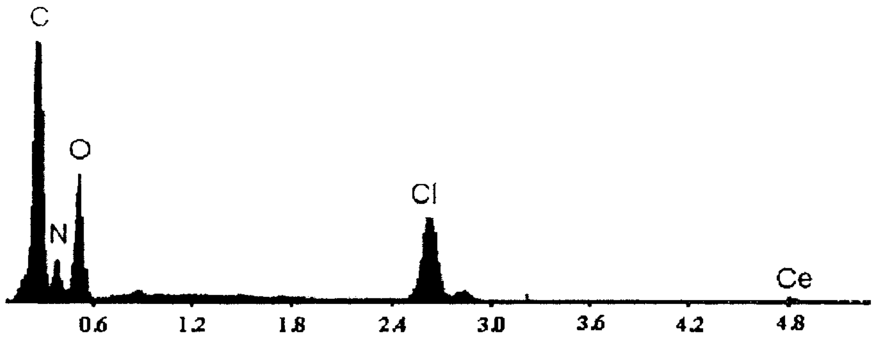
C
O
N
Cl
Ce
0.6
1.2
1.8
2.4
3.0
3.6
4.2
4.8

FIG. 2

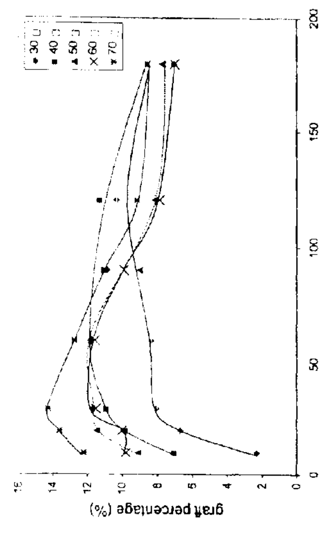


FIG. 3

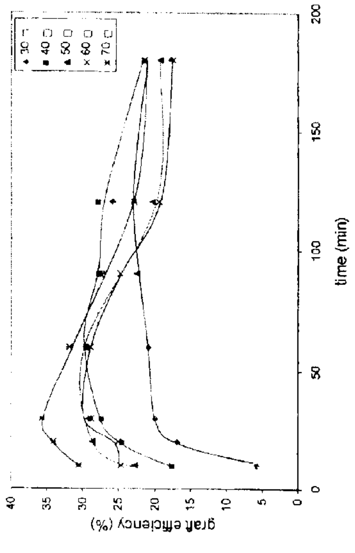


FIG. 4

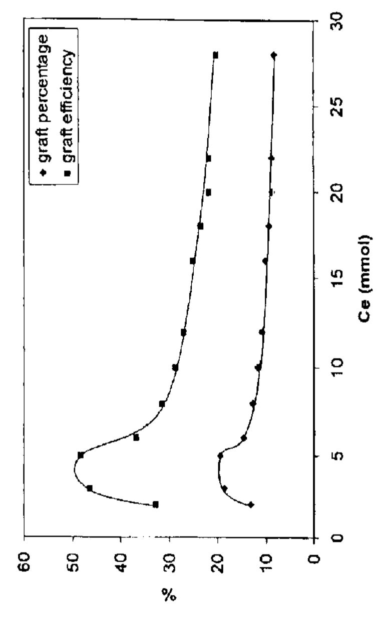


FIG. 5

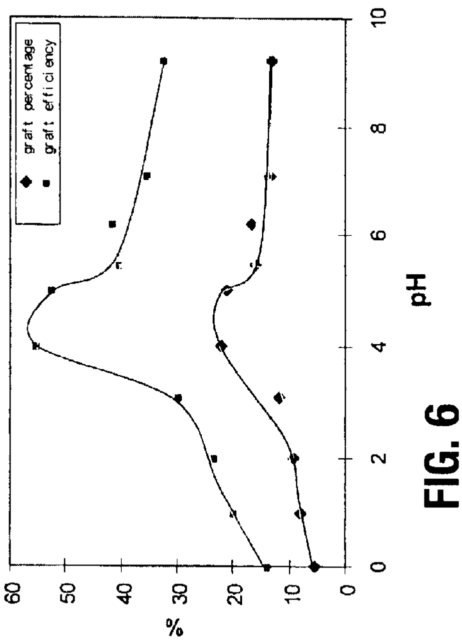


FIG. 6

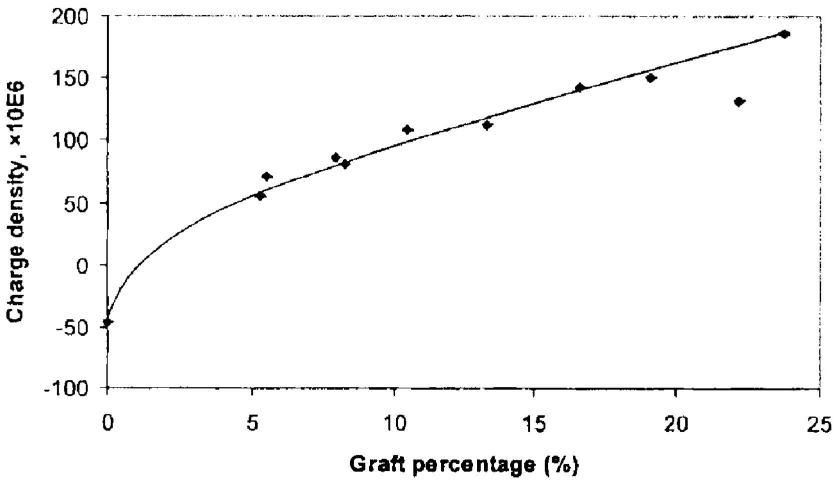
200
150
100
50
0
-50
-100
Charge density, ×10E6
0
5
10
15
20
25
Graft percentage (%)

FIG. 7

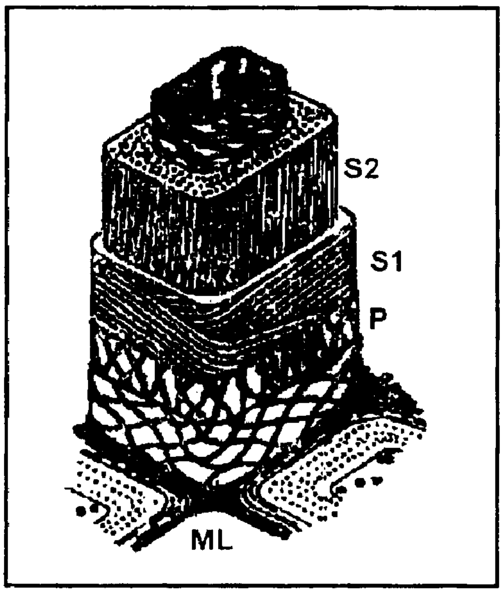
S2
S1
P
ML

FIG. 8

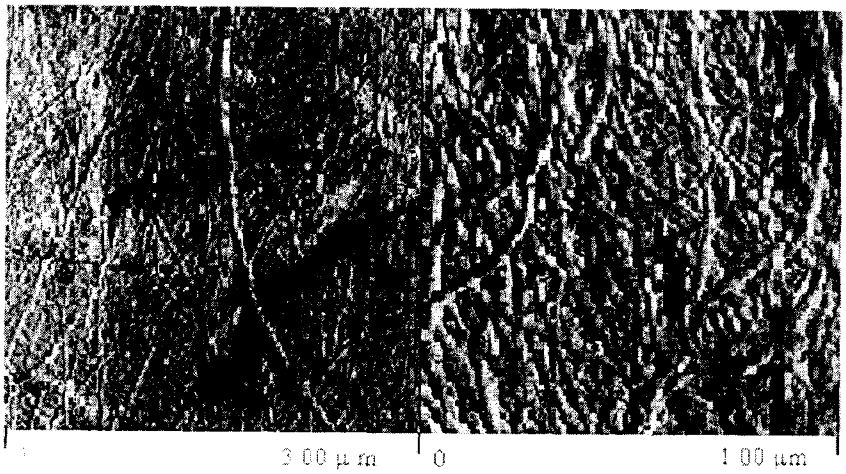


FIG. 9

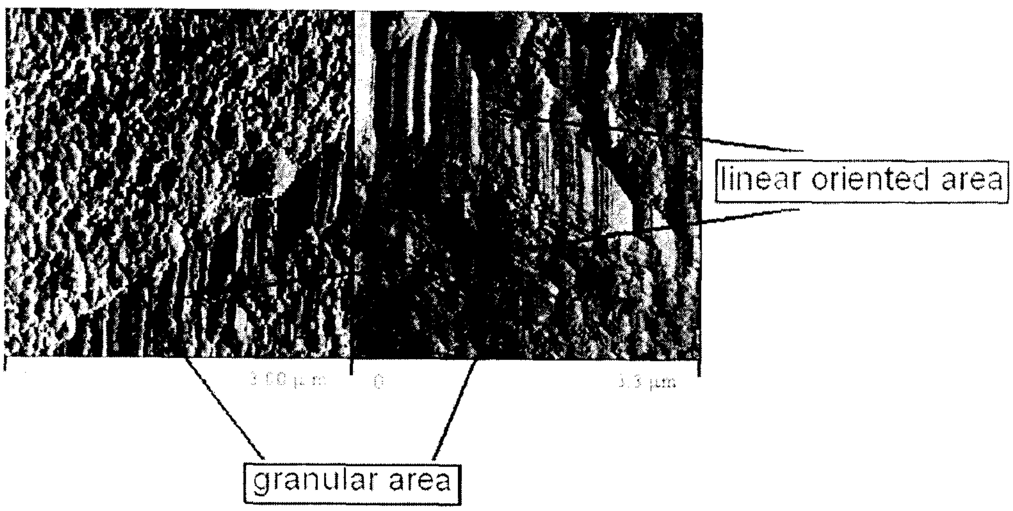


FIG. 10

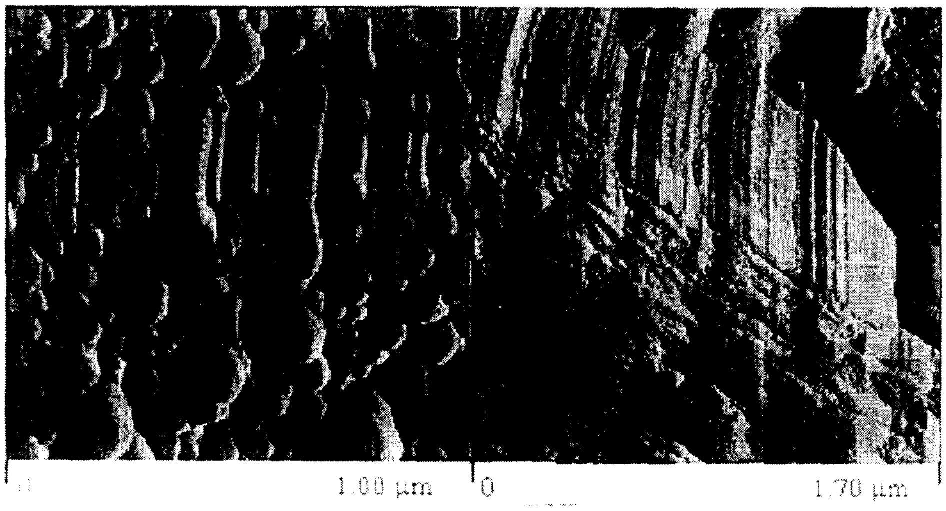


FIG. 11

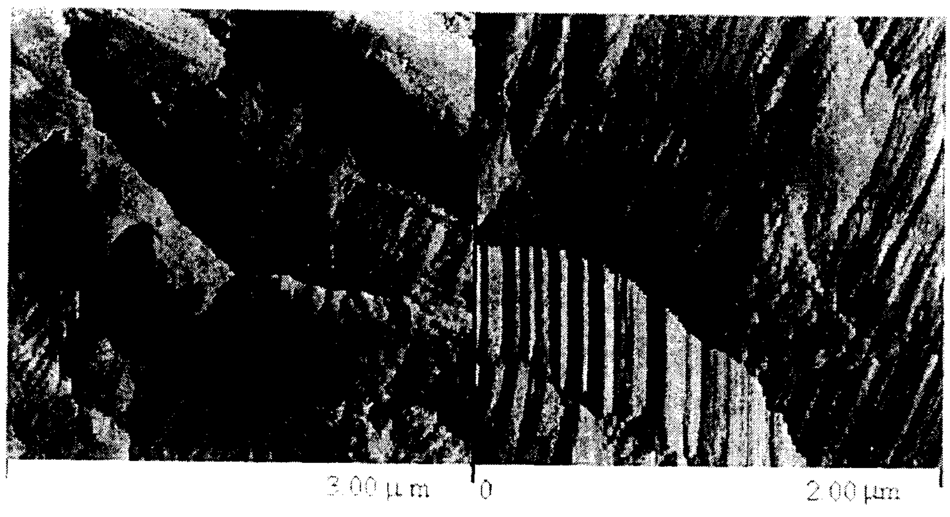


FIG. 12

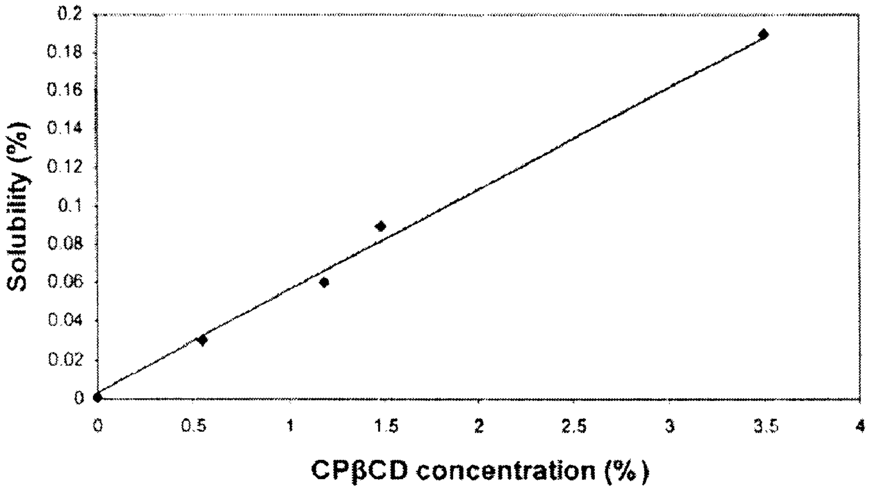
Solubility (%)
0.2
0.18
0.16
0.14
0.12
0.1
0.08
0.06
0.04
0.02
0
0
0.5
1
1.5
2
2.5
3
3.5
4
CPβCD concentration (%)

FIG. 13

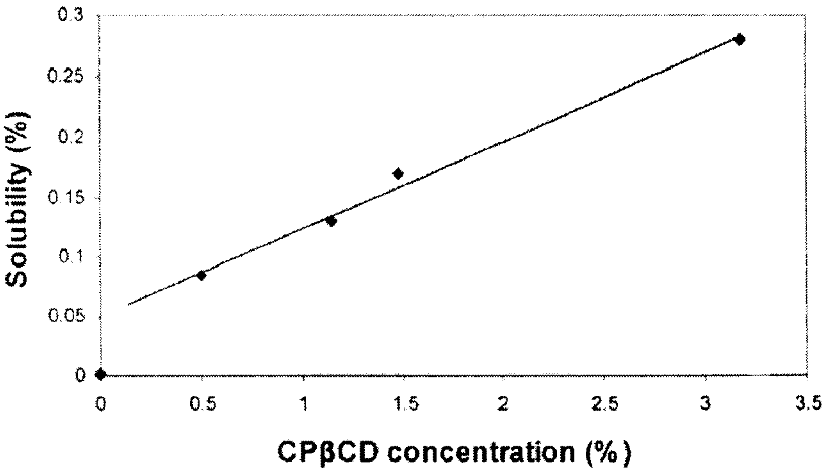
Solubility (%)
0.3
0.25
0.2
0.15
0.1
0.05
0
0
0.5
1
1.5
2
2.5
3
3.5
CPβCD concentration (%)

FIG. 14

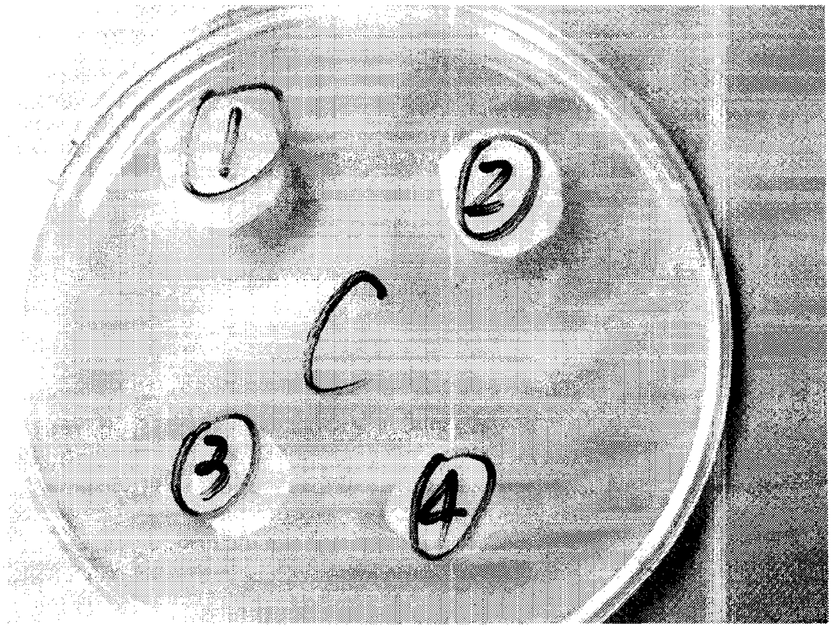


FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **HEIDI NIEMI ; HANNU PAULAPURO.** Review: Application of scanning probe microscopy to wood, fibre and paper research. *Paperi ia Puu-Paper and Timber,* 2002, vol. 84, 389-105
- **ANA MARIA MACIEL ; CHRISTOPHER P. WILKINS.** AFM ultrastructural studies of chemical softwood tracheids and secondary fines generated by various refining treatments. *Paper Technology,* 2002, vol. 43, 25-33
- **JOHANNA GUSTAFSSON ; LAURA CIOVICA ; JOUKO PELTONEN.** The ultastructure of spruce kraft pulps studied by atomic force microscopy (AFM) and X-ray photoelectron spectroscopy (XPS. *Polymer,* 2003, vol. 44, 661-670
- **W.A. DUCKER ; T.J. SENDEN ; R.M. PASHEL.** Direct measurement of colloidal forces using an atomic force microscope. *Nature,* 1991, vol. 353, 239
- **W.A. DUCKER ; T.J. SENDEN ; R.M. PASHLEY.** Measurement of forces in liquids using a force microscope. *Langmuir,* 1992, vol. 8, 1831
- **G.A. SMOOK.** Handbook for Pulp & Paper Technologists. Angus Wilde Pub, 1994, 11
- **ARIAS, M.J ; MOYANO, J.R ; GINES, J.M.** Investigation of the triamterene-cyclodextrin system prepared by co-grinding. *Int. J. Pharm,* 1997, vol. 153, 181-189
- **GIAMPIERO BETTINETTI ; PAOLA MURA ; MARIA TERESA FAUCCI ; MILENA SORRENTI ; MASSIMO SETTI.** Interaction of naproxen with noncrystalline acetyl band acetyl-g-cyclodextrins in the solid and liquid state. *European J of Pharmaceutical Sci,* 2002, vol. 15, 21-29